Europäisches Patentamt

European Patent Office

Office européen des brevets

(11) Publication number: **0 225 563**
**B1**

(12) **EUROPEAN PATENT SPECIFICATION**

(45) Date of publication of patent specification: **07.11.90**

(21) Application number: **86116586.8**

(22) Date of filing: **28.11.86**

(51) Int. Cl.⁵: **B 65 H 81/00**

(54) Fibre delivery assembly and fibre placement machine.

(30) Priority: **13.12.85 US 808911**

(43) Date of publication of application:
**16.06.87 Bulletin 87/25**

(45) Publication of the grant of the patent:
**07.11.90 Bulletin 90/45**

(84) Designated Contracting States:
**DE FR GB IT**

(56) References cited:
**AU-B- 15 691**
**DE-A-2 933 709**
**US-A-4 068 536**
**US-A-4 324 607**

(73) Proprietor: **Cincinnati Milacron Inc.**
**(a Delaware Corporation), 4701 Marburg Avenue**
**Cincinnati, Ohio 45209 (US)**

(72) Inventor: **Vaniglia, Milo Mario**
**105 Bonnie Lynn Terrace**
**Southgate, KY 41071 (US)**

(74) Representative: **Lally, William et al**
**FORRESTER & BOEHMERT Widenmayerstrasse**
**4/I**
**D-8000 München 22 (DE)**

Courier Press, Leamington Spa, England.

**Description**

The invention relates to fibre placement machines, and, in particular, relates to filament winding machines, wherein filaments or fibres are extended from a fibre creel assembly to a rotating form.

Typical uses of filament winding machinery are to create reinforced cylindrical shapes for pressure vessels, rocket casings, etc.

Certain prior art assemblies employ structures where the fibre support structure employs a vertically driven cross-slide, i.e. overhead to the horizontal rotating mandrel employed for work support, and the corresponding fibre creel assembly consisting of a plurality of fibre wound spools each threaded through a common payout eye, are carried overhead with the cross-slide. Other types of prior art assemblies employ a rotating work mandrel, in much the same manner as the cutting tool on a lathe. The horizontally-moving type machines are also provided with an overhead creel assembly to feed fibres to the payout eye.

It is to the latter type of machine that the present invention is directed.

For example in DE—A—2933709 there is shown a fibre delivery assembly comprising an elongate, horizontally-extending support beam, a carriage supported by the support beam for movement relative thereto in a first direction parallel to the axis of the beam, a slide assembly supported by the carriage for movement relative thereto in a second direction substantially at right angles to said first direction, a fibre creel assembly and a fibre placement head.

However in DE—A—2933709, the fibre creel assembly is mounted on the carriage, and the fibre placement head is secured direct to the slide assembly, fibre strand being fed from the creel to the placement head through the slide assembly.

Such a machine encounters difficulties when applying fibre to a large workpiece, and/or to a workpiece having a complicated three-dimensional shape.

Conversely, in accordance with the present invention, the fibre creel assembly is mounted on the slide assembly, and the fibre placement head is secured to the slide assembly through the intermediary of an articulable robot wrist whereby the placement head may be moved relative to the slide assembly about two mutually transverse axes, the fibre strands being fed from the creels directly to the placement head.

The slide assembly may be mounted on the carriage through the intermediary of a unit by which the slide assembly may be moved vertically relative to the carriage, or the slide assembly may involve a part which may be moved pivotally about a substantially horizontal axis, specifically an axis extending parallel to the first direction, whereby limited substantially vertical movement of the payout means may be achieved.

Advantageously the robot wrist is capable of rotating the fibre payout means in three mutually inclined axis.

The slide assembly is preferably elongate, with the fibre payout means mounted at one end portion, preferably that end portion which in use is adjacent to a workpiece to which fibre is to be applied, drive mechanism for the payout means being mounted at an opposite end portion of the slide assembly.

Advantageously the fibre payout means includes a cutter device to sever fibres drawn from the creel assembly, and mechanism to advance the severed end through an eye of the payout means.

According to this invention there is also provided a fibre placement machine comprising a workpiece holding machine for supporting a workpiece, and a fibre delivery assembly of the kind set out in the last preceding paragraphs.

Preferably the workpiece holding means comprises means for rotating the workpiece about a horizontal axis, and preferably a base upon which both the delivery assembly and the workpiece holding means are mounted, with the first direction of the fibre delivery means extending parallel to the axis of rotation of the workpiece holding means.

There will now be given a detailed description, to be read with reference to the accompanying drawings, of a fibre placement machine which is a preferred embodiment of this invention, and which has been selected for the purposes of illustrating the invention by way of example, the fibre placement machine comprising a fibre delivery assembly which is also illustrative of certain aspects of this invention.

In the accompanying drawings:

FIGURE 1 is a side elevational section depicting the fibre placement machine which is the preferred embodiment of this invention;

FIGURE 2 is a front view of the fibre delivery system of the preferred embodiment;

FIGURE 3 is a side elevational section depicting a modified fibre placement machine having vertical motion capability;

FIGURE 4 is a front elevational view of the fibre delivery system of the modified machine;

FIGURE 5 is a bottom plan view taken in the direction of arrow 5 of Figure 1, showing creel cross-slide assemblies of the machine;

FIGURE 6 is on enlarged side elevational view showing fibre payout assembly of the machine;

FIGURE 7 is a front elevational view showing fibre payout assembly;

FIGURE 8 is a plan view, in the direction of arrow 8—8 of Figure 7, showing a fibre guide assembly of the machine;

FIGURE 9 is a section through a compaction roller of the fibre payout assembly, taken on the line 9—9 of Figure 6;

FIGURE 10 is a section through the compaction roller pivot cylinder, taken along the line 10—10 of Figure 6;

FIGURE 11 is a section through restart mechanism of the machine, token along the line 11—11 of Figure 6;

FIGURE 12 is a side elevational section of a second modified fibre placement machine; and

FIGURE 13 is a front elevational section through the sub-slide and pivotable housing of the machine shown in Figure 12.

The fibre placement machine 100 which is the preferred embodiment of this invention comprises a fibre placement assembly 300 and a workholding mechanism 200 mounted to the floor adjacent to the assembly 300, the floor 201 acting as a common base for the workholding mechanism 200 and the fibre placement assembly 300. Here it may be appreciated that the design is chosen for its modularity, but that in certain instances, the workholding mechanism 200 and fibre placement assembly 300 may be constructed on a unitary base structure, for example, a casting or weldment. The work holding mechanism 200 is not detailed, since it comprises any of a plurality of prior art units which have a drive box or boxes, capable of holding and (at desired intervals) rotating a plurality of work piece forms 11a, 11b. Here it should be noted that when the work is rotated, the machine 100 is referred to as a "filament winder". However, it will be obvious to those skilled in the art, that further description of the machine 100 provides for the placement of fibres on a variety of surfaces, for example: concave, convex and planar.

The workpiece 11a, 11b forms are elongate, into the plane of the paper, and have their common axis 12 in a horizontal attitude (X-direction) to assist in loading and unloading the workpiece forms 11a, 11b.

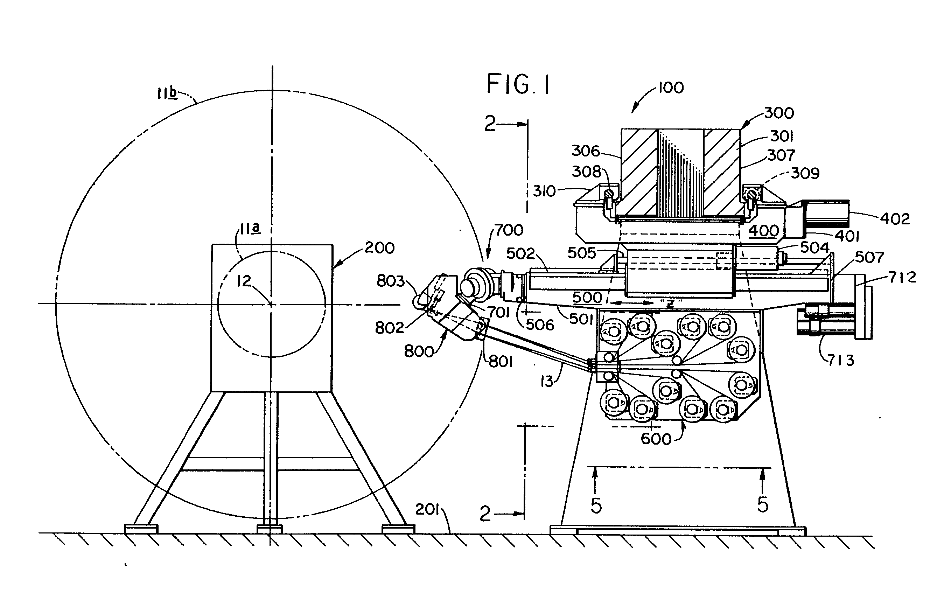

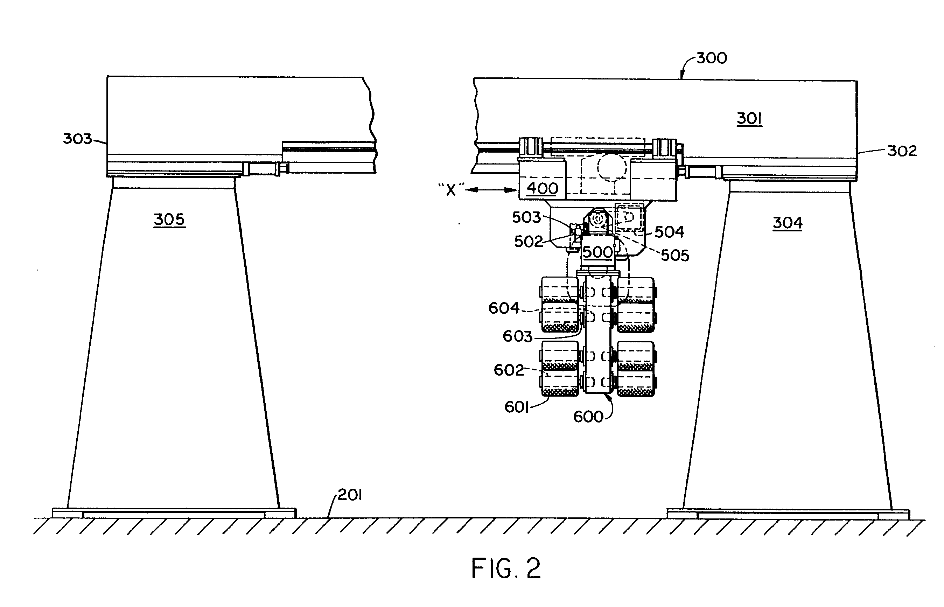

The fibre placement assembly 300 comprises an overhead horizontal support beam 301, depicted in cross-section as being bifurcated, but it may be appreciated by those skilled in the art that the beam 301 may be hollow and box-like, or solid, and still function as a support unit. The support beams 301 is, in turn, supported at opposite ends 302, 303 (see Figure 2) by end support stanchions 304, 305 which are mounted on the floor 201. The cross-sectional view of Figure 1 shows that the front and back faces 306, 307 of the support beam 301 have parallel cylindrical bars 308 mounted thereto. The bars 308, in turn, carry open-type ball bushings 309, such as those manufactured commercially by the Thompson Bearing Company and manufactured under the Trade Mark "ROUNDWAY" bearings. The bearings 309 are carried in brackets 310 which are bolted to an underslung carriage 400 — that is, passing beneath the support beam 301 — and thus, depending therefrom. The carriage 400 is provided with a drive box 401, drive motor 402, and rack and pinion (not shown) at the rear to propel the carriage 400 lengthwise down the support beam 301 in the "X"-direction.

The carriage 400 supports a cross-slide 500, which has elongate, hollow housing 501, and is carried on a square way system 502 mounted in antifriction recirculating roller bearings 503, also available from the Thompson Co. The cross-slide 500 is oriented to move at 90° to the horizontal, X-direction axis 12 of the workpiece form holding mechanism 200. A drive motor 504 and ball screw 505 are provided to propel the cross-slide 500 normal to the support beam 301. The cross-slide housing 501 supports a fibre creel assembly 600 on its lowermost face, so that the fibre spools, or creels 601, are readily accessible to machine support personnel, for purposes of maintaining the integrity of the fibre systems and/or reloading the assembly 600. The fibre creels 601 are rotatable around horizontal shafts 602, extending outward from both sides of the creel assembly 600, parallel to the support beam 301. The motorised creel shafts 602 are held in bearings 603 and driven by a torque motor 604 so that fibre 13 or filament may be pulled from the creel 601 with a predetermined amount of fibre tension, and when slack occurs the torque motors 604 will back-drive to take up the slack, in a manner similar to that employed in composite tape-laying machines. In the preferred embodiment of Figures 1 and 2, a robotic wrist unit 700 is carried on the front face 506 of the cross-slide housing 501 and, whilst construction details have been omitted, the wrist unit may be purchased commercially from the Cincinnati Milacron Inc., the assignee of the present invention. The wrist unit is essentially the same as that depicted in U.S. 4,068,536 and the reader is referred to that patent for construction details. For purposes of understanding the present invention, it is sufficient to realise that the end effector plate 701, or tooling plate, is movable along triordinate axes, in accordance with internal drive gears and concentric tubes (not shown) which extend from the wrist unit 700 to the rear face 507 of the cross-slide housing 501, where the tubes are connected through a drive box 712 to a plurality of drive motors 713. The drive motors have the ability to drive ("roll") one, two, or three transversely-extending axes simultaneously to manipulate the end effector plate.

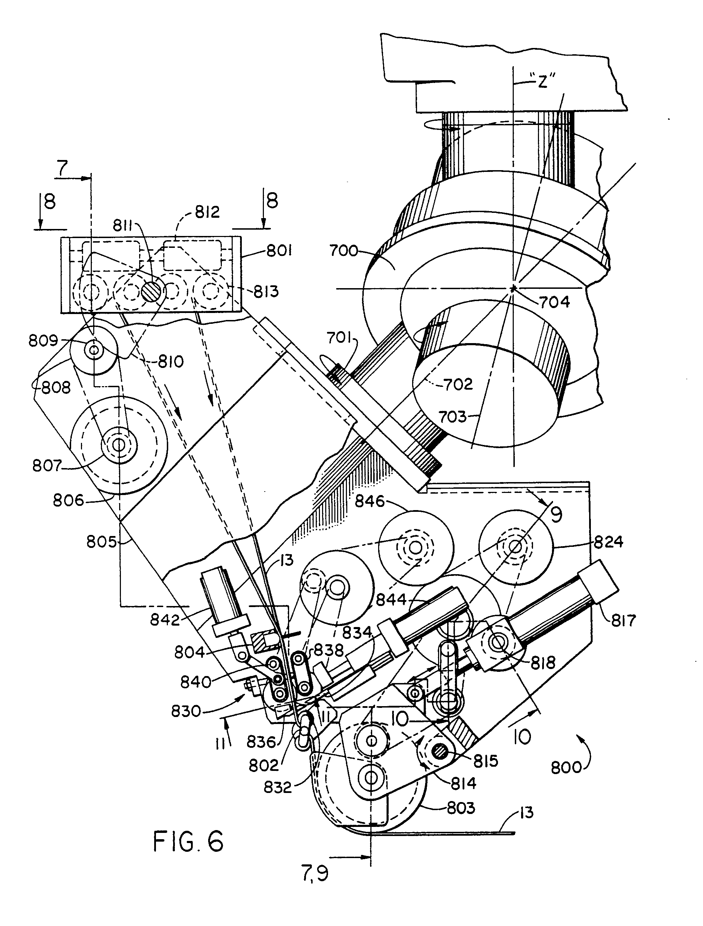

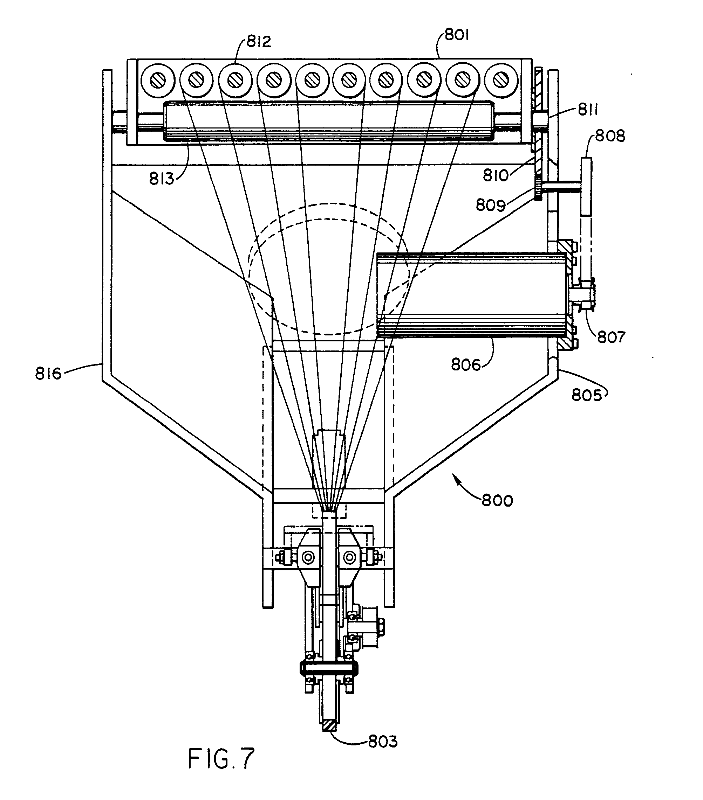

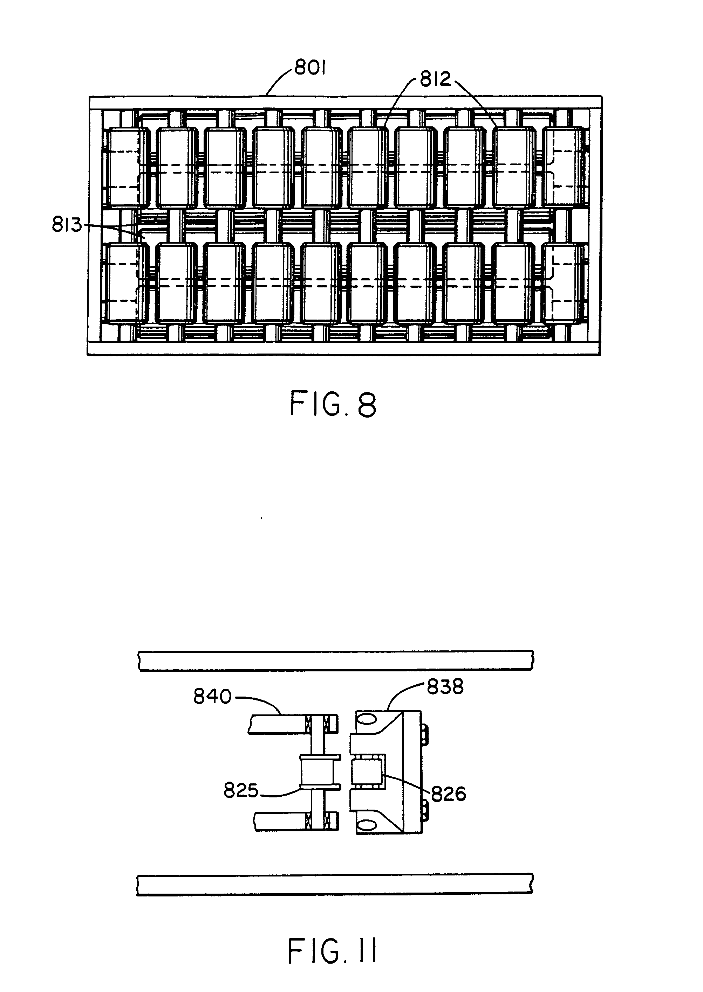

The end effector plate 701 carries a tooling package, comprising a fibre payout unit 800, wherein a plurality of fibres 13 are pulled from the creel assembly 600, through a guide roller assembly 801, and ultimately, through a fibre payout eye 802. In addition, the fibre payout unit 800 has a compaction roller 803 which may be optionally employed at predetermined times to assist in impressing the fibres 13 against a workpiece from 11a, 11b. The operation of the payout unit will be described further in connection with Figures 6—11.

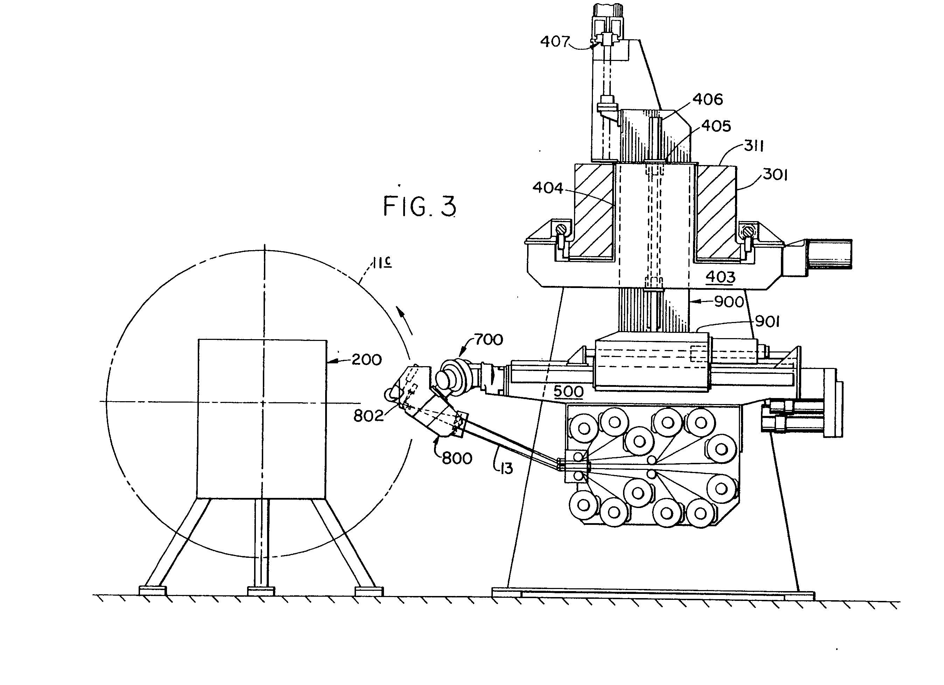

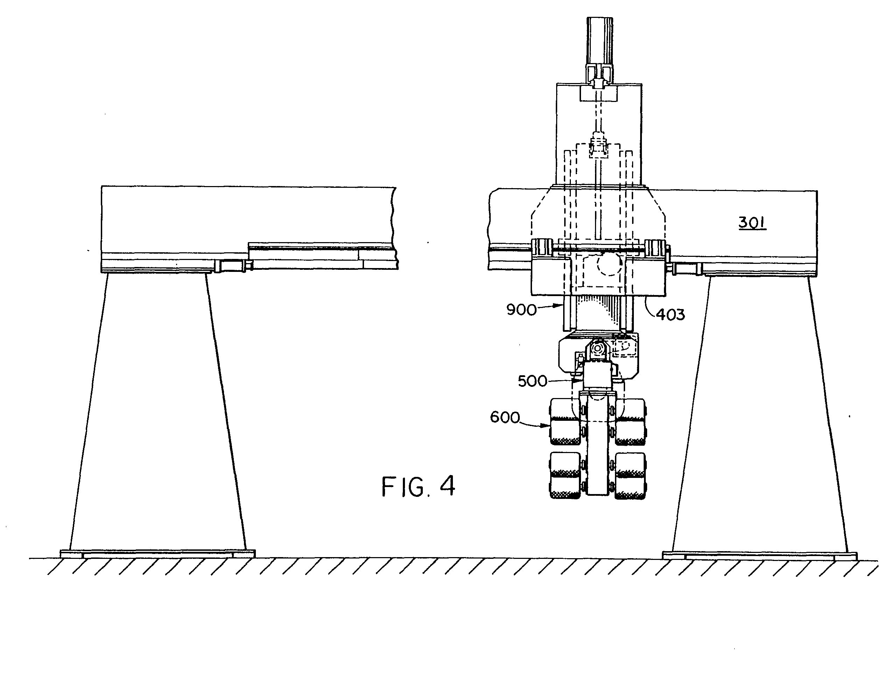

Figures 3 and 4 depict a second version of the present invention wherein a vertical, or "Y"-axis is established for moving the payout eye 802 in a vertical fashion relative to a workpiece form 11c. The support beam 302 is again depicted as being bifurcated, and a carriage 403, resembling an inverted "T", has a central carriage stem portion 404 extending therebetween to the topmost surface 311. The carriage stem portion has top and bottom open type ball bushings 405, and ball bars 406 are fitted to a vertically extending saddle unit 900 which is propelled by a ball screw drive 407 with respect to the carriage 403. The bottom section 901 of the saddle unit 900 serves to carry the cross-slide unit 500 in the manner depicted in Figure 1.

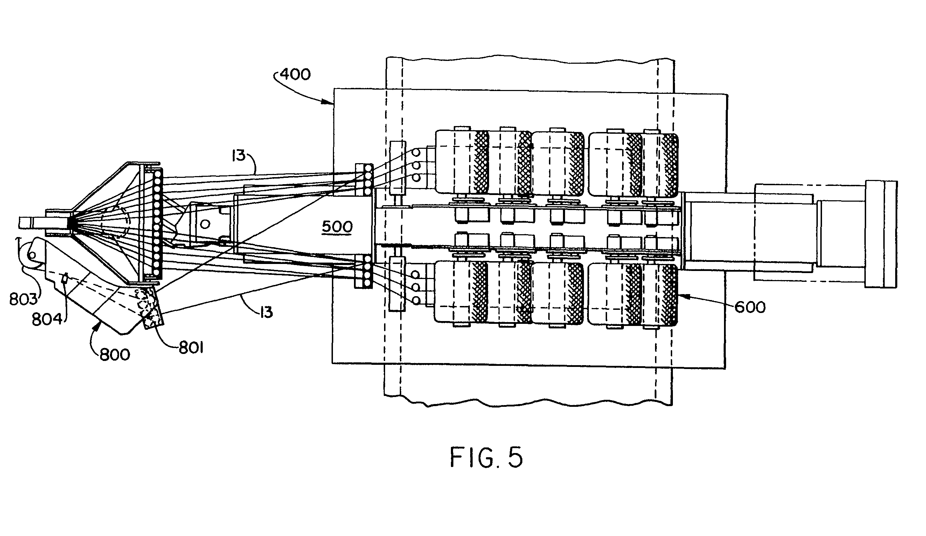

The bottom view of Figure 5 illustrates the creel assembly with the sideways-extending creels 601 of fibre, with individual fibres 13 being pulled through the guide roller assembly 801, and ultimately through a comb unit 804 to the fibre payout eye 802.

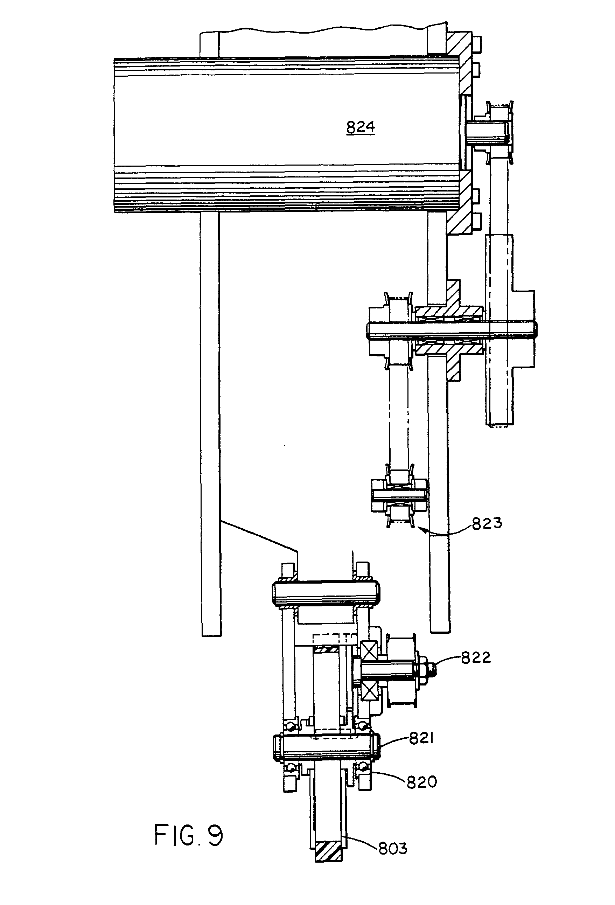

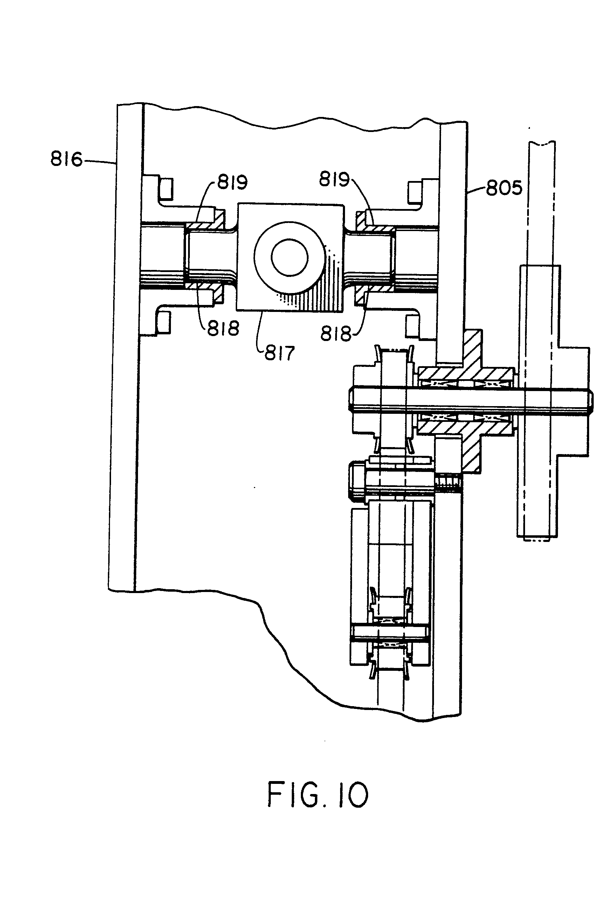

Figures 6—11 refer to the fibre payout unit 800, and in the partial section of Figure 6, the unit 800 is shown mounted to the end effector plate of the wrist unit. The end effector 701 is rotatable around a first oblique roll axis 702 converging with the central longitudinal Z-axis of the cross-slide 500. The wrist unit 700 is also rotatable around the cross-slide unit Z-axis and the assembly is also rotatable around a second oblique axis 703 passing through the point of convergence 704 of the first axis 702 with the horizontal Z-axis. The side wall 805 of the payout unit 800 supports a torque motor 806 driving through a pair of sprockets 807, 808 to a pinion 809 in mesh with a rotatable gear sector 810. The gear sector 810 serves to rotate the guide roller assembly 801 through a drive shaft 811. The fibres are guided across short and long crossed rollers 812, 813; through internal camb unit 804, through a restart mechanism 830, past a fibre cutter device 832, and through the payout eye 802. The payout eye 802 is normally the last element in the unit 800, but, as depicted in Figure 6, compacting roller 803 has been actuated to impress fibres 13 on a laydown surface, similar to the technique utilised in some composite tape laying machine. The compacting roller 803 is carried on a pivot plate 814 supported on a pivot pin 815 extending between the walls 805, 816 of the payout unit 800. The plate 814 is moved between retracted and advanced (shown solid) positions by a clevis-mounted cylinder 817 which is supported on side trunions 818 in bearings 819 located within the side walls 805, 816 of the payout unit 800 (see Figure 10). Figure 9 shows the bearing support system 820 for the compaction roller 803 with the roller shaft 821 geared to an output shaft 822 which is connected through a timing pulley/belt system 823 to a motor 824 for rotating compaction roller 803 when a new fibre placement is begun to achieve adhesion of the free ends of the fibres to the surface with minimal fibre slippage.

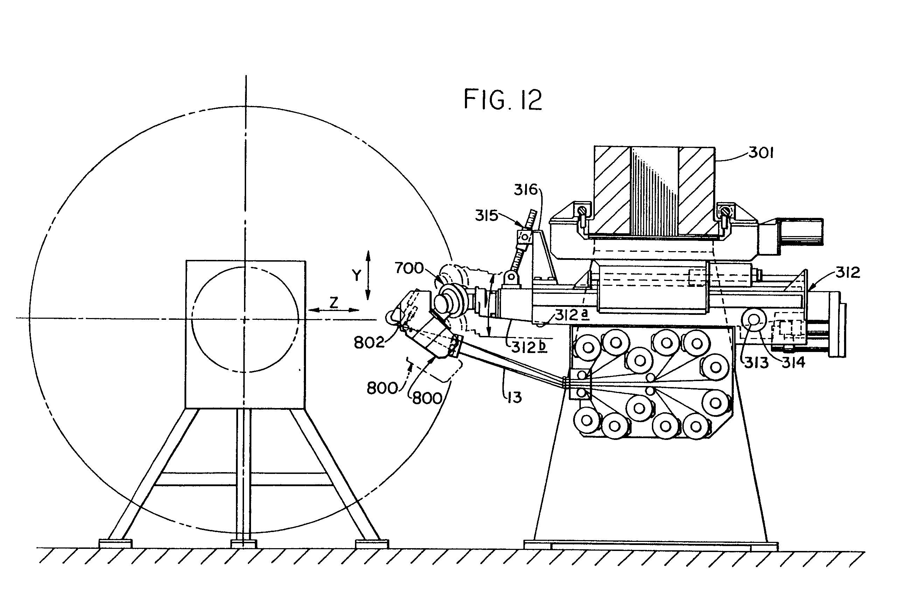

The fibre cutter device 832 and the restart mechanism 830 provide the means for automatically controlling placement of fibres with discontinuities in the fibres. The cutter knife 834, shown leaving first free ends to be placed on the surface by further advance of the payout unit 800 and second free ends to begin a new fibre placement. Fibre placement beginning with the second free ends is started by use of the restart mechanism 830. The fibres are grasped above the second free ends thereof between grip belt 825 and 826 by advancement of the belt roller housings 838 and 840 effected by cylinders 842 and 844. The grip belts 825 and 826 are seen in end view in the belt roller housings 838 and 840 in Figure 11. The grip belts 825 and 826 are advanced over their respective rollers by the motor 846 through the drive train of pulleys and belts depicted in Figure 6. The second ends of the fibres are thus advanced through the payout eye 802 to the nip between the compaction roller 803 and the surface. Once the new fibre placement has begun and the second free ends are adhered to the surface, cylinders 842 and 844 retract belt roller housings 838 and 840 to release the fibres from the grasp of grip belts 825 and 826 to permit fibre placement to continue.

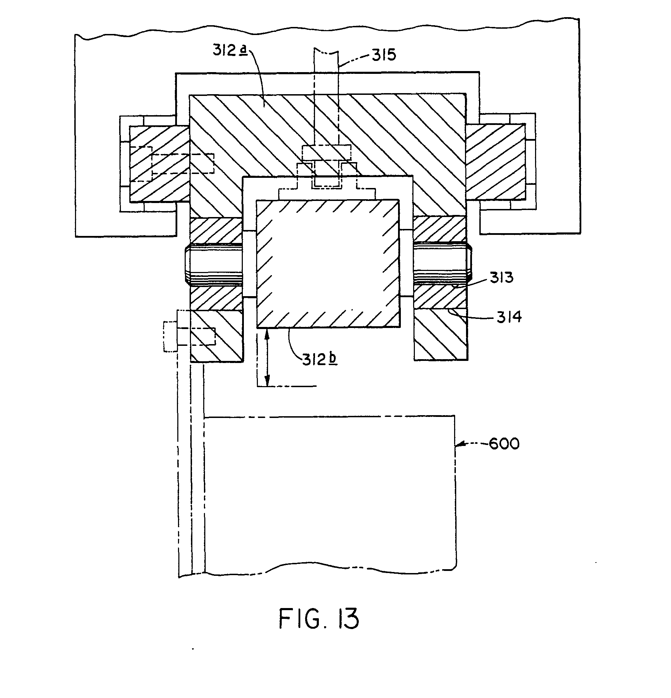

In another embodiment of the fibre delivery assembly shown in Figures 12 and 13, the cross-slide 312 comprises two members: a linearly movable subslide 312a supporting a pivotable housing 312b. The housing 312b has a pair of trunions 313 near its rearmost end which are supported in side bearings 314 within the sub-slide 312a. The front of the subslide 312a has a linear actuator 315 (for example, the ball screw and nut system shown), clevis-mounted at the ends to a subslide bracket 316 and pivot housing 312b. By powering the actuator 315, a substantially vertical movement of the payout eye 802 may be achieved without the necessity of providing a vertical slideway system.

It may be appreciated by those skilled in the art, that the small horizontal movement seen at the payout eye 802 while the pivot housing 312b is moved, may be compensated-out by slight sub-slide movement effected by a machine control (not shown).

It may be also appreciated by those skilled in the art that the vertical component of the movement at the payout eye 802 is useful for dispensing fibres 13 onto a vertical planar surface, in absence of the Y-axis arrangement depicted in Figures 3 and 4.

While the preferred embodiment utilises a robotic wrist unit 700 having three axes of roll movement, various sub-movements may be utilised and found within other, simpler robot wrists. For example, the payout eye 802 may be manipulated by a wrist having only smaller vertical movement. The robotic wrist may also be utilised to compensate for small unwanted components of movement, for example, Z-axis movement resulting from pivot motion of the pivotable housing 312b.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. A fibre delivery assembly comprising:

(a) an elongate, horizontally-extending support beam (301);

(b) a carriage (400, 403) supported by the support beam (301) for movement relative thereto in a first direction parallel to the axis of the beam;

(c) a slide assembly (500) supported by the carriage for movement relative thereto in a second direction substantially at right angles to said first direction;

(d) a fibre creel assembly (600) for carrying a plurality of fibre creels (601); and

(e) a fibre placement head (800) for depositing fibres on a workpiece;

characterised in that:

(i) the fibre creel assembly (600) is mounted on the slide assembly (500);

(ii) the fibre placement head (800) is secured to the slide assembly (500) through the intermediary of an articulatable robot wrist (700) whereby the head (800) may be moved relative to the slide assembly about two mutually-transverse axes (702, 703); and

(iii) fibre strands are fed from the fibre creels directly to the placement head.

2. A fibre delivery assembly according to Claim 1 wherein the slide assembly (500) is mounted on the carriage (403) through the intermediary of a unit (900) by which the slide assembly may be moved vertically relative to the carriage, power means (407) being provided to move the slide assembly vertically.

3. A fibre delivery assembly according to Claim 1 wherein the slide assembly (312) comprises a portion (312b), and power means (315) by which the portion (312b) may be pivoted about a substantially horizontal axis whereby limited substantially vertical movement of the fibre placement head (800) is achieved.

4. A fibre delivery assembly according to Claim 3 wherein the axis of pivotal movement of the portion (312a) is parallel to the first direction.

5. A fibre delivery assembly according to any one of the preceding claims wherein the robot wrist (700) is capable of rotating the fibre placement head (800) about three axes.

6. A fibre delivery assembly according to any one of the preceding claims wherein the slide assembly (500) is elongate and the fibre placement head (800) is mounted at one end portion, the opposite end portion supporting a drive mechanism (713) for the payout means.

7. A fibre delivery assembly according to any one of the preceding claims wherein the fibre placement head comprises a cutter device (832) to sever fibres drawn from the creel assembly (600), and mechanism (830) to advance the severed end through the placement head.

8. A fibre delivery assembly according to Claim 1 wherein the wrist (700) is mounted on a member (312b) which is mounted on a member (312a) of the slide assembly for movement relative thereto about a pivot axis (313, 314), power means (315) being provided for pivoting the member (312b) and hence the wrist (700) and the placement head (800) about said pivot axis.

9. A fibre placement machine comprising a workpiece holding means (200) for supporting a workpiece, and a fibre delivery assembly according to any one of the preceding claims.

10. A fibre placement machine according to Claim 9 wherein the workpiece holding means comprises means for rotating the workpiece about a horizontal axis.

11. A fibre placement machine according to Claim 10 comprising a base (201) upon which the holding means (200) and the fibre delivery assembly (300) are mounted with the first direction of the fibre delivery means extending parallel to the axis of rotation of the holding means.

## Patentansprüche

1. Vorrichtung zum Abgeben von Fasern, mit

(a) einem verlängerten, sich horizontal erstreckenden Träger (301);

(b) einem Wagen (400, 403), der vom Träger (301) getragen ist und relativ dazu in eine erste Richtung parallel zur Achse des Trägers bewegbar ist;

(c) einer Gleitvorrichtung (500), die vom Wagen getragen ist und relativ dazu in eine zweite Richtung im wesentlichen rechtwinklig zur ersten Richtung bewegbar ist;

(d) einer Faserspulenvorrichtung (600) zum Tragen einer Vielzahl von Faserspulen (601); und

(e) einem Faser-Plazierungskopf (800) zum Ablegen von Fasern auf einem Werkstück;

dadurch gekennzeichnet, daß:

(i) die Faserspulenvorrichtung (600) auf der Gleitvorrichtung (500) angebracht ist;

(ii) der Faser-Plazierungskopf (800) durch einen gelenkigen automatischen Schwenker (700) als Zwischenstück an der Gleitvorrichtung befestigt ist, wodurch der Kopf (800) relativ zur Gleitvorrichtung um zwei quer zueinander verlaufende Achsen (702, 703) bewegt werden kann; und

(iii) Faserstränge von den Faserspulen direkt zum Plazierungskopf geleitet werden.

2. Vorrichtung zum Abgeben von Fasern nach Anspruch 1, bei der die Gleitvorrichtung (500) über eine Einheit (900) als Zwischenstück am Wagen (403) angebracht ist, über welche die Gleitvorrichtung relativ zum Wagen senkrecht bewegt werden kann, wobei eine Antriebvorrichtung (407) vorgesehen ist, um die Gleitvorrichtung in senkrechter Richtung zu bewegen.

3. Vorrichtung zum Abgeben von Fasern nach Anspruch 1, bei der die Gleitvorrichtung (312) einen Abschnitt (312b) und eine Antriebsvorrichtung (315) aufweist, durch die der Abschnitt (312b) um eine im wesentlichen waagerechte Achse schwenkbar ist, wodurch eine begrenzte, im wesentlichen senkrechte Bewegung des Faser-Plazierungskopfes erreicht wird.

4. Vorrichtung zum Abgeben von Fasern nach Anspruch 3, bei der die Achse der Schwenkbewegung des Abschnittes (312b) parallel zur ersten Richtung liegt.

5. Vorrichtung zum Abgeben von Fasern nach einem der vorangehenden Ansprüche, bei der der automatische Schwenker (700) den Faser-Plazierungskopf (800) um drei Achsen drehen kann.

6. Vorrichtung zum Abgeben von Fasern nach einem der vorangehenden Ansprüche, bei der die Gleitvorrichtung (500) langgestreckt ist und der Faser-Plazierungskopf (800) an einem Endabschnitt angebracht ist, wobei der andere Endabschnitt einen Antriebsmechanismus (713) für die Ausgabeeinrichtung trägt.

7. Vorrichtung zum Abgeben von Fasern nach einem der vorangehenden Ansprüche, bei der der Faser-Plazierungskopf eine Schneidvorrichtung (832) zum Abtrennen von von der Spulenvorrichtung (600) gezogenen Fasern und einen Mechanismus (830) zum Vorschieben des abgetrennten Endes durch den Plazierungkopf aufweist.

8. Vorrichtung zum Abgeben von Fasern nach Anspruch 1, bei der der Schwenker (700) auf einem Bauteil (312b) angebracht ist, welches auf einem Bauteil (312a) der Gleitvorrichtung für die Bewegung relativ dazu um eine Schwenkachse (313, 314) angebracht ist, wobei eine Antriebsvorrichtung (315) zum Verschwenken des Bauteils (312b) und damit des Schwenkers (700) und des Plazierungskopfes (800) um die Schwenkachse vorgesehen ist.

9. Maschine zum Plazieren von Fasern, mit einer Werkstück-Haltevorrichtung (200) zum Tragen eines Werkstücks und mit einer Vorrichtung zum Abgeben von Fasern nach einem der vorangehenden Ansprüche.

10. Maschine zum Plazieren von Fasern nach Anspruch 9, bei der die Werkstück-Haltevorrichtung eine Einrichtung zum Drehen des Werkstücks um eine horizontale Achse aufweist.

11. Maschine zum Plazieren von Fasern nach Anspruch 10, mit einer Grundplatte (201), auf der die Haltevorrichtung (200) und die Vorrichtung zum Abgeben von Fasern angeordnet sind, wobei die erste Richtung der Vorrichtung zum Abgeben von Fasern sich parallel zur Drehachse der Haltevorrichtung erstreckt.

**Revendications**

1. Système d'alimentation de fibres comprenant:

(a) une poutre de support allongée s'étendant horizontalement (301);

(b) un chariot (400, 403) monté sur la poutre de support (301) pour le mouvement par rapport à celle-ci dans une première direction parallèle à l'axe de la poutre,

(c) un coulisseau (500) monté sur le chariot pour le mouvement par rapport à celui-ci dans une seconde direction sensiblement à angle droit par rapport à la première direction;

(d) un râtelier porte-ensouples de fibres (600) destiné à supporter plusieurs ensouples de fibres (601); et

(e) une tête de positionnement de fibres (800) destinée à déposer des fibres sur une pièce, caractérisé en ce que.

(I) le râtelier porte-ensouples de fibres (600) est monté sur le coulisseau (500);

(II) la tête de positionnement de fibres (800) est fixée sur le coulisseau (500) par l'intermédiaire d'un poignet de robot articulé (700) permettant le mouvement de la tête (800) par rapport au coulisseau sur deux axes transversaux réciproques (702, 703); et

(III) les torons de fibres sont alimentés directement à partir des râteliers porte-ensouples de fibres sur la tête de positionnement.

2. Système d'alimentation de fibres selon la revendication 1, dans lequel le coulisseau (500) est monté sur le chariot (403) par l'intermédiaire d'une unité (900) grâce à laquelle on peut déplacer le coulisseau verticalement par rapport au chariot, des moyens de puissance (407) étant prévus pour déplacer le coulisseau verticalement.

3. Système d'alimentation de fibres selon la revendication 1, dans lequel le coulisseau (312) comprend une portion (312b) et un moyen de puissance (315) grâce auquel on peut faire pivoter la portion (312b) autour d'un axe sensiblement horizontal, ce qui permet d'obtenir un mouvement limité sensiblement vertical de la tête de positionnement (800).

4. Système d'alimentation de fibres selon la revendication 3, dans lequel l'axe du mouvement pivotant de la portion (312a) est parallèle à la première direction.

5. Système d'alimentation de fibres selon l'une quelconque des revendications précédentes, dans lequel le poignet de robot (700) est capable de mettre en rotation la tête de positionnement de fibres (800) autour de trois axes.

6. Système d'alimentation de fibres selon l'une quelconque des revendications précédentes, dans lequel le coulisseau (500) est allongé et la tête de positionnement de fibres (800) est montée sur une portion d'extrémité, la portion d'extrémité opposée supportant un mécanisme d'entraînement (713) pour les moyens de dévidage.

7. Système d'alimentation de fibres selon l'une quelconque des revendications précédentes, dans lequel la tête de positionnement de fibres comprend un dispositif de coupe (832) destiné à sectionner les fibres tirées par le râtelier porte-ensouples (600) et le mécanisme (830) pour faire avancer l'extrémité sectionnée à travers la tête de positionnement.

8. Système d'alimentation de fibres selon la revendication 1, dans lequel le poignet (700) est monté sur un élément (312b) qui est monté sur un élément (312a) du coulisseau pour le mouvement relatif par rapport à celui-ci autour d'un axe de pivotement (313, 314), les moyens de puissance (315) étant prévus pour la mise en pivotement de l'élément (312b) et partant du poignet (700) et de la tête de positionnement (800) autour de l'axe de pivotement.

9. Machine de positionnement de fibres comprenant un dispositif de fixation ou bridage de pièce (200) destiné à supporter une pièce façonnée et un ensemble d'alimentation de fibres selon l'une quelconque des revendications précédentes.

10. Machine de positionnement de fibres selon la revendication 9, dans laquelle le moyen de fixation de pièce façonnée comprend un système pour la mise en rotation de la pièce façonnée autour d'un axe horizontal.

11. Machine de positionnement de fibres selon la revendication 10, comprenant une embase (201) sur laquelle sont montés le moyen de fixation (200) et le système d'alimentation de fibres (300) avec la première direction du système d'alimentation de fibres s'étendant parallèlement à l'axe de rotation du moyen de fixation.

FIG.1

EP 0 225 563 B1

FIG. 2

EP 0 225 563 B1

FIG. 3

FIG. 4

FIG.5

FIG. 6

FIG.7

FIG. 8

FIG. 11

824

823

822

821

820

803

FIG. 9

FIG. 10

FIG. 12

FIG. 13